# EUROPEAN PATENT APPLICATION

(11) **EP 4 254 639 A1**
(43) Date of publication of application: **04.10.2023**
(21) Application number: 22194267.5
(22) Date of filing: 07.09.2022
(51) Int. Cl.: H01M 50/507, H01M 50/519, H01M 50/569

(54) **BATTERY APPARATUS**

(30) Priority: 30.03.2022 CN 202210334355
(71) Applicant: CALB Co., Ltd., Changzhou City, Jiangsu Province (CN)
(72) Inventor: QIU, Feixing, Changzhou City, Jiangsu Province (CN)
(74) Representative: Becker, Eberhard

(57) **Abstract**

A battery apparatus includes a flexible flat cable (1) and a busbar (3). A collection end of the flexible flat cable (1) is provided with a collection component (2). A larger surface (32) of the busbar (3) is provided with a connection hole (30), and the collection component (2) is inserted into the connection hole (30). The collection component (2) and/or the busbar (3) is provided with a first limiting structure (4) for mutually limiting the collection component (2) and the connection hole (30).

## Description

### BACKGROUND

### Technical Field

The disclosure relates to the technical field of batteries, and in particular, relates to a battery apparatus.

### Description of Related Art

In the prior art, a flexible flat cable (FFC) is adopted most of the time for the signal collection wiring harness assembly to achieve cost reduction. In the related art, the collection end of the FFC needs to be connected to a structure such as a busbar. However, since the flexible flat cable is relatively soft, it is difficult to achieve precise connecting and positioning at the collection end of the flexible flat cable. For instance, the nickel piece at the collection end of the conventional FFC is connected to the busbar by welding, but since the FFC is relatively soft as a whole, it is difficult to locate the nickel piece at the collection end and the busbar. As a result, the efficiency and yield of the welding operation are low, which in turn affects the overall assembly efficiency and yield of the battery apparatus.

### SUMMARY

The disclosure provides a battery apparatus.

In an aspect, the disclosure provides a battery apparatus including a flexible flat cable and a busbar. A collection end of the flexible flat cable is provided with a collection component. A larger surface of the busbar is provided with a connection hole, and the collection component is inserted into the connection hole. The collection component and/or the busbar is provided with a first limiting structure for mutually limiting the collection component and the connection hole.

To make the aforementioned more comprehensible, several embodiments accompanied with drawings are described in detail as follows.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic view of a partial structure of a battery apparatus according to an embodiment of the disclosure.
FIG. 2 is a schematic view of a busbar of the battery assembly according to an embodiment of the disclosure.
FIG. 3 is a schematic view of a partial structure of a flexible flat cable of the battery apparatus according to an embodiment of the disclosure.
FIG. 4 is a schematic cross-sectional view of a connection structure between the flexible flat cable and the busbar according to an embodiment of the disclosure.
FIG. 5 is a schematic cross-sectional view of a connection structure between the flexible flat cable and the busbar according to an embodiment of the disclosure.
FIG. 6 is a schematic view of a collection component of the flexible flat cable according to an embodiment of the disclosure.
FIG. 7 is a schematic cross-sectional view of a connection structure between the flexible flat cable and the busbar according to another embodiment of the disclosure.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

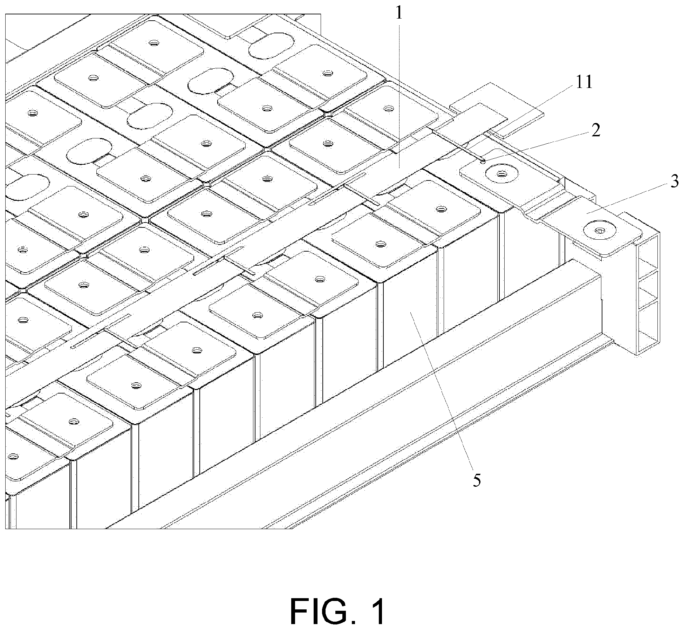

As shown in FIG. 1, FIG. 2, FIG. 3, FIG. 4, FIG. 5, FIG. 6, and FIG. 7, the disclosure provides a battery apparatus including a flexible flat cable 1 and a busbar 3. A collection end of the flexible flat cable 1 is provided with a collection component 2. A larger surface 32 of the busbar 3 is provided with a connection hole 30 and the collection component 2 is inserted into the connection hole 30 of the busbar 3. The collection component 2 and/or the busbar 3 is provided with a first limiting structure 4 for mutually limiting the collection component 2 and the connection hole 30.

In the battery apparatus provided by the disclosure, the collection component 2 of the collection end of the flexible flat cable 1 is inserted into the connection hole 30 of the busbar 3, such that the flexible flat cable 1 is connected to the busbar 3. Further, the collection component 2 and the connection hole 30 are mutually limited through the first limiting structure 4, such that the collection component 2 is prevented from being detached from the connection hole 30, and the connection reliability between the collection component 2 and the connection hole 30 is further ensured. Compared to the technical solution in which the nickel sheet is welded to the busbar provided by the related art, in the connection solution provided by the disclosure, the positioning between the collection component 2 and the connection hole 30 may be easily implemented and the connection operation may be simply and conveniently performed, so the assembly efficiency of the flexible flat cable 1 may be effectively improved. Further, in the disclosure, the collection component 2 and the connection hole 30 of the busbar 3 have simple structures, may be conveniently installed, require reduced costs, and are beneficial to industrialized production.

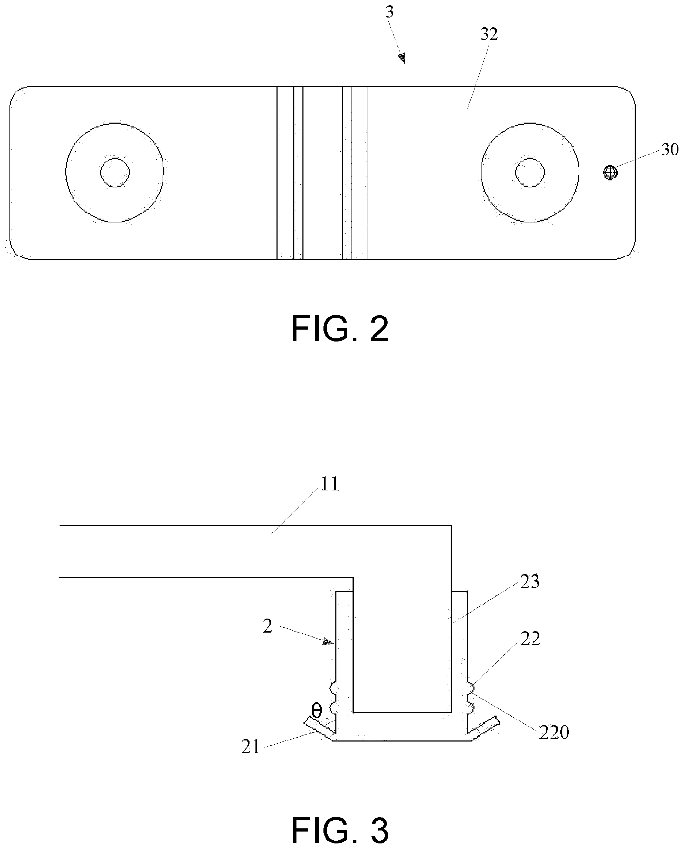

To be specific, as shown in FIG. 1 and FIG. 2, the busbar 3 is a flat sheet-like structure and has two opposite surfaces with larger areas, which are called larger surfaces 32. Among the larger surfaces 32, one larger surface 32 faces a battery 5 and is connected to the battery 5, and the connection hole 30 is provided on the other larger surface facing away from the battery 5. The flexible flat cable may include a conventional flexible printed cable (FPC) and a flexible flat cable (FFC). Since the flexible flat cable 1 has a soft structure, it is difficult to achieve precise welding and positioning when the collection end of the flexible flat cable and the busbar are welded, and the welding operation efficiency and yield are low. However, compared with the welding operation, the operation of allowing the collection end of the flexible flat cable 1 to be inserted into and connected to the busbar 3 through the collection component 2 may be easily and efficiently performed and further exhibits a favorable yield.

Exemplarily, the collection component 2 is perpendicular to the larger surface of the busbar 3, that is, the collection component 2 is inserted into the connection hole 30 perpendicularly to the larger surface of the busbar 3. In this way, processing and assembly may be facilitated. Further, a main body of the flexible flat cable 1 is parallel to the larger surface of the conductive row 3. When the relative position of the main body of the flexible flat cable 1 and the busbar 3 is shifted, the collection component 2 is inserted vertically into the connection hole 30, which is conductive to the rotation of the collection component 2 in the connection hole 30, such that the relative positional deviation between the flexible flat cable 1 and the busbar 3 may be alleviated and adapted, and that the connection failure caused by the deviation of between the flexible flat cable 1 and the busbar 3 may be prevented from occurring.

In some embodiments, as shown in FIG. 3, FIG. 4, FIG. 5, FIG. 6, and FIG. 7, the collection component 2 is a columnar structure extending in a depth direction of the connection hole 30.

Exemplarily, the collection component 2 is rotatably disposed in the connection hole 30. In this way, no matter where the collection end of the flexible flat cable 1 is located on the busbar 3, the collection component 2 may be adaptively inserted into the connection hole 30. Further, since the collection component 2 is rotatable with respect to the connection hole 30, even if relative torsion occurs between the flexible flat cable 1 and the busbar 3, resulting in a certain offset, the connection between the collection component 2 and the busbar 3 may not be affected and connection reliability is improved.

Preferably, the collection component 2 is cylindrical, and the connection hole 30 is a circular hole. In this way, a good buffering effect is provided between the collection component 2 and the connection hole 30, damage may not occur easily, and the service life may be increased. Further, since the collection component 2 is connected to the connection hole 30 through engagement instead of welding, the collection component 2 can rotate in the circular hole. In this way, the insertion adaptability may be improved and the connection operation may be easily performed. Besides, since a certain torsional offset is allowed between the flexible flat cable 1 and the busbar 3, the connection reliability may be improved.

Exemplarily, one end of the collection component 2 is provided with a crimp hole 23. A collection cable branch 11 of the flexible flat cable 1 is inserted into the crimp hole 23 and connected to the collection component 2 by crimping.

In some embodiments, as shown in FIG. 3, FIG. 4, FIG. 5, and FIG. 6, the first limiting structure 4 includes a groove 31 provided on a side wall of the connection hole 30 and an elastic limiting member provided on the collection component 2, and the elastic limiting member is engaged with the groove 31.

The elastic limiting member may be elastically deformed, and may be compressed by force during insertion into the connection hole 30. Further, when the elastic limiting member reaches the position where the groove 31 is located, the shape may be restored due to the change of the force, and the elastic limiting member is then engaged with the groove 31. In this way, the mutual position-limitation between the collection component 2 and the connection hole 30 may be achieved, the connection component 2 is prevented from being detached from the connection hole 30, and the connection reliability between the collection component 2 and the connection hole 30 is ensured.

Exemplarily, the collection component 2 is a columnar structure extending in the depth direction of the connection hole 30. One end of the collection component 2 is connected to the main body of the flexible flat cable 1, and the elastic limiting member is disposed at one end of the collection component 2 away from the end connected to the main body of the flexible flat cable 1.

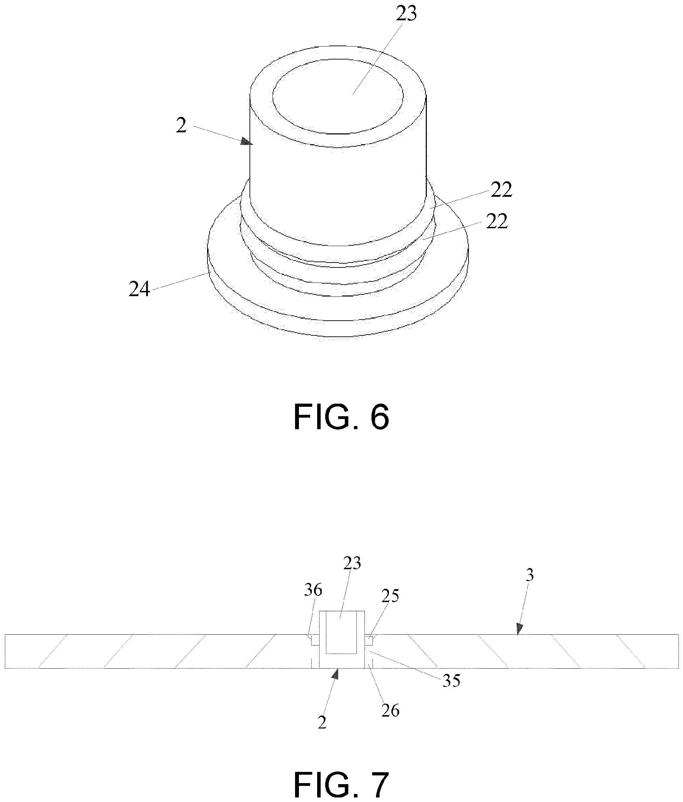

Exemplarily, the collection component 2 is a columnar structure extending in the depth direction of the connection hole 30. The elastic limiting member is perpendicular to a side surface of the columnar structure and is able to be elastically compressed or stretched in a direction perpendicular to the side surface of the columnar structure. In this way, the elastic limiting member may be configured to have a smaller size, and a better elastic engagement effect is also provided. For instance, as shown in FIG. 6, the elastic limiting member may be a rubber ring 24 sleeved on the side surface of the collection component 2, of certainly, it is not limited to the rubber ring 24, and the elastic limiting member may also be other elastic materials or structures.

Exemplarily, as shown in FIG. 3, FIG. 4, and FIG. 5, the elastic limiting member is an elastic piece 21. The elastic piece 21 has good elastic properties, may be compressed conveniently, and may recover and deform quickly, which is favorable for elastic engagement.

Exemplarily, the elastic piece 21 is a conductive member. In this way, while the elastic piece 21 is engaged with the busbar 3, electrical connection may be achieved, such that the flow area between the collection component 2 and the busbar 3 is increased.

Exemplarily, the elastic piece 21 is adjacent to a bottom end of the collection member 2 and is specifically arranged on a side wall of the collection component 2, so as to be easily engaged with the groove 31 located on the side wall of the connection hole 30.

Exemplarily, an included angle θ is provided between the elastic piece 21 and the side wall of the collection component 2, and an opening of the included angle θ faces one end of the collection component 2 connected to the main body of the flexible flat cable 1. That is, the included angle θ faces an insertion opening of the connection hole 30. In this way, the limitation between the elastic piece 21 and the groove 31 is improved, the elastic piece 21 is prevented from being detached from the groove 31, and the connection reliability between the collection component 2 and the connection hole 30 is thereby ensured.

Exemplarily, the first limiting structure 4 includes at least two pairs of grooves 31 and elastic pieces 221 that are engaged and matched. For instance, the collection component 2 is a columnar structure extending in the depth direction of the connection hole 30. There are 2 to 3 elastic pieces 21 evenly arranged in a circumferential direction of the collection component 2, and correspondingly, 2 to 3 grooves 31 are evenly arranged in a circumferential direction of the side wall of the connection hole 30. When the 2 to 3 elastic pieces 21 are correspondingly engaged with the 2 to 3 grooves 31, the connection between the collection component 2 and the connection hole 30 is achieved in place.

Exemplarily, the collection component 2 is made of a metal material, for example, a metal nickel material. The elastic piece 21 may be made of a metal material, and the elastic piece 21 is preferably made of the same material as the collection component 2, for example, an elastic nickel piece. In this way, the collection component 2 and the elastic piece 21 may be integrally formed as one piece. Alternatively, the elastic piece 21 may be a non-metallic material. Herein, the main body of the collection component 2 and the elastic piece 21 may be prepared separately and then welded or bonded together, and this may be determined according to the actual situation.

Certainly, the specific form of the first limiting structure 4 is not limited to the above embodiments. In practical applications, the first limiting structure 4 may be determined according to the specific forms of the collection component 2 and the connection hole 30 and actual process requirements.

In some other embodiments, as shown in FIG. 7, the collection component 2 is a columnar structure extending in the depth direction of the connection hole and includes a first end and a second end. The first end is connected to the main body of the flexible flat cable, for example, the first end may be crimped to the collection end of the flexible flat cable through the crimp hole 23. To be specific, the first limiting structure includes a first protrusion 35 disposed on the side wall of the connection hole and a second protrusion 25 and a third protrusion 26 disposed on the side surface of the collection component 2. The second protrusion 25 and the third protrusion 26 are arranged in a direction from the first end to the second end of the collection component 2. The third protrusion 26 is an elastic structure, so that the collection component 2 may be inserted into the connection hole from the second end. The first protrusion 35 is engaged between the second protrusion 25 and the third protrusion 26. As the first protrusion 35 is limited by both the second protrusion 25 and the third protrusion 26, the collection component 2 is prevented from being detached from the connection hole and is further prevented from being inserted too deeply, so that the inserting and positioning of the connection component 2 may be easily performed.

Exemplarily, the second protrusion 25 and/or the third protrusion 26 is a conductive structure. In this way, the flow area between the collection component 22 and the busbar 3 is increased.

Exemplarily, both the second protrusion 25 and the third protrusion 26 are inserted into the connection hole, and the side of the second protrusion 25 and/or the third protrusion 26 facing away from the insertion opening of the connection hole 30 is provided with a chamfer to facilitate smooth introduction into the connection hole.

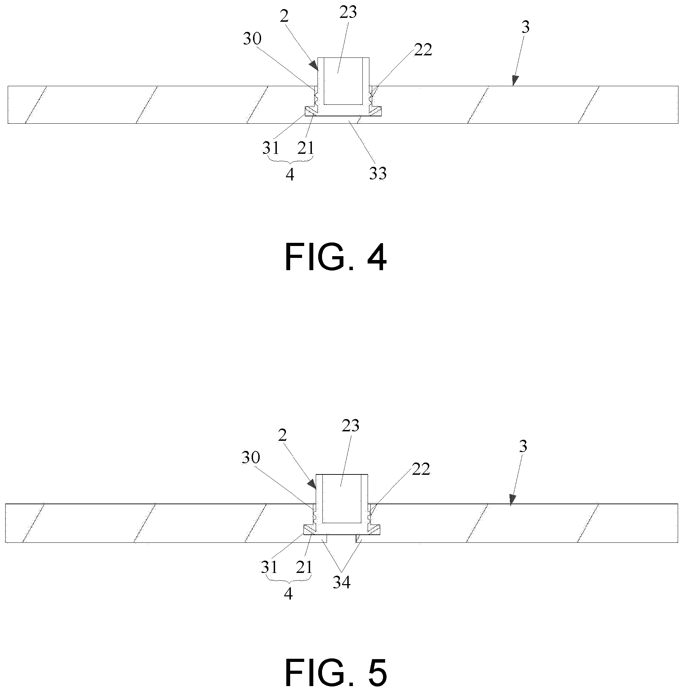

In some embodiments, as shown in FIG. 4, the connection hole 30 is a blind hole, that is, the connection hole 30 does not penetrate the busbar 3, one end of the connection hole 30 is an opening, and the other end of the connection hole 30 has a bottom wall 33. The bottom wall 33 may limit the position of the collection component 2, so that the insertion depth may be easily controlled, thus the insertion in place may be easily performed, and the insertion efficiency and yield may be improved.

In some other embodiments, as shown in FIG. 5, the connection hole 30 may also be a through hole. To be specific, herein one end of the through hole away from the insertion opening of the collection component 2 is provided with a second limiting structure, and the second limiting structure limits an end portion of the collection component 2. Exemplarily, the second limiting structure may be a protruding structure 34 on an inner wall of the connection hole 30 or may be an adhesive layer that seals the opening at the bottom portion of the through hole, which may be determined according to the actual situation.

In some embodiments, as shown in FIG. 3, FIG. 4, FIG. 5 and FIG. 6, the side wall of the collection component 2 is further provided with a protruding portion 22 in interference contact with the connection hole 30. To be specific, the protruding portion 22 functions as a connection contact point and is a structure directly protruding from the main body of the collection component 2. By arranging the protruding portion 22, the contact yield and contact area between the collection component 2 and the busbar 3 may be increased, and the electrical connection between the collection component 2 and the busbar 3 may thus be improved.

Exemplarily, the collection component 2 is a columnar structure extending in the depth direction of the connection hole 30. The side wall of the collection component 2 is circumferentially provided with one or more rings of annular protruding portions 22, and the annular protruding portions 22 are in interference contact with the connection hole 30. Preferably, the collection component 2 includes at least two rings of annular protruding portions 22.

Exemplarily, a first chamfer 220 is provided on a side of the protruding portion 22 facing away from the insertion opening of the connection hole 30. The arrangement of the first chamfer 220 enables the protruding portion 22 to be easily guided and inserted into the connection hole 30, and the insertion operation of the collection component 2 may be easily performed.

Certainly, the protruding portion 22 is not limited to the abovementioned shape. To be specific, in the actual design, the shape and number of the protruding portion 22 may be designed according to the requirement of the flow area between the collection component 2 and the busbar 3. Further, in the disclosure, the sizes of the collection component 2 and the connection hole 30 may also be designed according to the requirement of the flow area between the collection component 2 and the busbar 3 and are not specifically limited herein.

In some embodiments, as shown in FIG. 7, an edge of the insertion opening of the connection hole is provided with a second chamfer 36. In this way, the collection component 2 may be easily guided and inserted into the connection hole 30, and the insertion operation of the collection component 2 may be easily performed.

To be specific, each chamfer provided in the disclosure may be formed by inclined surfaces or by arc surfaces, as long as the chamfer may function to facilitate insertion and introduction.

In some embodiments, as shown in FIG. 1, the battery apparatus may be a battery module or a battery pack. To be specific, the battery apparatus includes a battery assembly, and the battery assembly includes a plurality of batteries 5. The busbar 3 is connected to the terminal poles of the batteries 5, and the collection component 2 collects the information of the batteries 5 through the busbar 3.

To be specific, since the flexible flat cable 1 is generally provided with a plurality of collection ends, the connection of the collection ends and the busbar 3 provided in this embodiment is beneficial to simplify the positioning and connection operation of each collection end, such that the overall connection and assembly process of the flexible flat cable 1 may be simplified, and the assembly efficiency of the battery apparatus may be effectively improved.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery apparatus, comprising a flexible flat cable (1) and a busbar (3), wherein a collection end of the flexible flat cable (1) is provided with a collection component (2), a larger surface (32) of the busbar (3) is provided with a connection hole (30), the collection component (2) is inserted into the connection hole (30), and the collection component (2) and/or the busbar (3) is provided with a first limiting structure (4) for mutually limiting the collection component (2) and the connection hole (30).

2. The battery apparatus according to claim 1, wherein the collection component (2) is perpendicular to the larger surface (32) of the busbar (3).

3. The battery apparatus according to claim 1, wherein the first limiting structure (4) comprises a groove (31) provided on a side wall of the connection hole (30) and an elastic limiting member provided on the collection component (2), and the elastic limiting member is engaged with the groove (31).

4. The battery apparatus according to claim 3, wherein the collection component is a columnar structure extending in a depth direction of the connection hole (30), and the elastic limiting member is perpendicular to a side surface of the columnar structure and is able to be elastically compressed or stretched in a direction perpendicular to the side surface of the columnar structure.

5. The battery apparatus according to claim 3, wherein the collection component (2) is a columnar structure extending in a depth direction of the connection hole (30), one end of the collection component (2) is connected to a main body of the flexible flat cable (1), and the elastic limiting member is disposed at one end of the collection component (2) away from the end connected to the main body of the flexible flat cable (1).

6. The battery apparatus according to claim 3, wherein the elastic limiting member is an elastic piece (21).

7. The battery apparatus according to claim 6, wherein the elastic piece (21) is a conductive member.

8. The battery apparatus according to claim 6, wherein an included angle is provided between the elastic piece (21) and the collection component (2), and an opening of the included angle faces one end of the collection component (2) connected to a main body of the flexible flat cable (1).

9. The battery apparatus according to claim 6, wherein the first limiting structure (4) comprises at least two pairs of the grooves (31) and the elastic pieces (21) that are engaged and matched.

10. The battery apparatus according to claim 1, wherein the collection component (2) is a columnar structure extending in a depth direction of the connection hole (30) and comprises a first end and a second end, and the first end is connected to a main body of the flexible flat cable (1),
the first limiting structure (4) comprises a first protrusion (35) disposed on a side wall of the connection hole (30) and a second protrusion (25) and a third protrusion disposed on a side surface of the collection component (2), the second protrusion (25) and the third protrusion (26) are arranged in a direction from the first end to the second end of the collection component (2), the third protrusion (26) is an elastic structure, and the first protrusion (35) is engaged between the second protrusion (25) and the third protrusion (26).

11. The battery apparatus according to claim 10, wherein the second protrusion (25) and/or the third protrusion (26) is a conductive structure.

12. The battery apparatus according to claim 1, wherein the collection component (2) is cylindrical, and the connection hole (30) is a circular hole.

13. The battery apparatus according to claim 1, wherein the connection hole (30) is a blind hole.

14. The battery apparatus according to claim 1, wherein the connection hole (30) is a through hole, one end of the through hole away from an insertion opening is provided with a second limiting structure, and the second limiting structure is configured for limiting an end portion of the collection component (2).

15. The battery apparatus according to claim 1, wherein a side wall of the collection component (2) is provided with a protruding portion (22) in interference contact with the connection hole (30).

16. The battery apparatus according to claim 15, wherein the collection component (2) comprises at least two rings of the protruding portions (22).

17. The battery apparatus according to claim 15, wherein a first chamfer (220) is provided on a side of the protruding portion (22) facing away from an insertion opening of the connection hole (30).

18. The battery apparatus according to any one of claims 1-17, wherein an edge of an insertion opening of the connection hole (30) is provided with a second chamfer (36).

19. The battery apparatus according to any one of claims 1-17, wherein the collection component (2) is a columnar structure extending in a depth direction of the connection hole (30), one end of the collection component (2) is provided with a crimp hole (23), and a collection cable branch (11) of the flexible flat cable (1) is inserted into the crimp hole (23) and connected to the collection component (2) by crimping.

20. The battery apparatus according to any one of claims 1-17, wherein the collection component (2) is rotatably disposed in the connection hole (30).
